# EUROPÄISCHE PATENTANMELDUNG

(11) **EP 2 545 769 A1**
(43) Veröffentlichungstag der Anmeldung: **16.01.2013**
(21) Anmeldenummer: 11405286.3
(22) Anmeldetag: 15.07.2011
(51) Int. Cl.: A01K 13/00, A43B 3/00

(54) **Hufschuh**

(71) Anmelder: Tiszarovits, Monika, 8805 Richterswil (CH); Tiszarovits, Tibor, 8805 Richterswil (CH)
(72) Erfinder: Tiszarovits, Monika, 8805 Richterswil (CH); Tiszarovits, Tibor, 8805 Richterswil (CH)
(74) Vertreter: Frei Patent Attorneys

(57) **Zusammenfassung**

Ein erfindungsgemässer Hufschuh (1) weist nebst einer Sohle (7) und einem Schaft (4) auch ein am Schaft (4) befestigtes Leuchtmittel (2) mit mindestens einem lichtemittierenden Element (14) und einer Batterie zur Versorgung des Leuchtmittels (2) mit elektrischer Energie auf. Optional kann der Hufschuh einen innenseitig befestigbaren oder befestigten Gaiter (3) aufweisen..

## Beschreibung

Die Erfindung betrifft einen Hufschuh.

Das Ausrüsten eines Pferdes zum Ausritt ist bekanntlich sehr zeitaufwändig insbesondere wenn die Hufe eines Pferdes nicht beschlagen sind sondern das Pferd barhufig geritten und gehalten wird. Neben dem Zaumzeug, Sattel und vielem mehr müssen im Fall eines barhufigen Pferdes zumindest vor einem Ausritt zusätzlich Hufschuhe angelegt werden. Über dies hinaus ist es für Ausritte auf öffentlichen Strassen notwendig, das Pferd hinreichend zu signalisieren, was mit zusätzlichem Aufwand bei der Ausrüstung zum Ausritt verbunden ist.

Auf Strassen und Wegen sind Pferd und Reiter Verkehrsteilnehmer und müssen entsprechende Vorschriften beachten. So muss bei knappem oder fehlendem Tageslicht sowohl der Reiter als auch das Pferd ausreichend signalisiert sein. Das Pferd soll von vorne, von hinten und von der Seite gut sichtbar sein.

Bisweilen wird dieser Pflicht nachgekommen indem sowohl der Reiter als auch das Pferd mit reflektierenden Bändern versehen werden. Es gibt hierfür die verschiedensten Ausführungsformen: reflektierende Bänder können an Zaumüberzügen, Fesselbändern, Gamaschen, Hufglocken, Halsbändern, Schweifband etc. angebracht werden.

Bei den aufgeführten Lösungen kommt es nicht selten dazu, dass die oben angeführten reflektierenden Bänder aufgrund von Schmutzablagerung und Abnutzung nicht lange leuchten/reflektieren und daher regelmässig ersetzt werden müssen. Je nach Ausführungsform und Unterlage (bspw. direkt auf dem Fell des Pferdes) können die mit reflektierenden Bändern ausgestatteten Gegenstände während des Ausritts verrutschen. Wenn die reflektierenden Bänder nur auf die entsprechenden Gegenstände (bspw. Fesselband, Schweifleuchtband) aufgeklebt und nicht genäht sind lösen sich diese mit der Zeit aufgrund von Nässe und Abnutzung ab. Ausserdem leuchten reflektierende Bänder nur so stark, wie sie selber angeleuchtet werden. Wenn sie gar nicht oder nur schwach angeleuchtet werden ist dies nicht ausreichend um gesehen zu werden und um optimale Sicherheit sowohl für Pferd als auch für Reiter zu gewährleisten. Bänder aus phosphoreszierendem Material leuchten unter Umständen nicht genügend weit und man kann sie somit als nicht ausreichend zum Zweck der Signalisierung betrachten. Zudem ist der Zeitaufwand für das Anbringen der diversen reflektierenden Bändern.

Auch das Anziehen von Hufschuhen ist bekanntlich zeitaufwendig und erfordert eine gewisse Geschicklichkeit. Der Hufschuh soll dabei nicht zu eng sitzen und auch nicht zu weit sein. Ausserdem soll Irritationen oder Verletzungen vorgebeugt werden. Oft wird zusätzlich zum Hufschuh noch ein Fesselschützer, ein so genannter Gaiter angezogen.

Eine erste Schwierigkeit besteht bereits darin, den Huf überhaupt im Hufschuh optimal zu positionieren und zu stabilisieren bevor der jeweilige Verschlussmechanismus zum Fixieren des Hufschuhs getätigt werden kann. Verschlussmechanismen sind bspw. Schnallen, Klettverschluss, Riemen, Klammern, Spangen, Drehverschlüsse und so weiter. Sie dienen der optimalen Befestigung des Hufschuhs am Huf. Beispiele für derartige Mechanismen und unterschiedliche Hufschuhmodelle finden sich beispielsweise in den Schriften WO 2009/082749, US 6,694,713, US 2005/166556, US 5,224,549, US 3,732,929, oder US 7,493,963.

Das Anbringen eines Gaiters erfordert noch zusätzliche Schritte. Dabei kann auch der Gaiter leicht verrutschen.

In der WO 2009/082749 wird ein Hufschuh gezeigt, der zur Stabilisierung und optimalen Befestigung des aus zwei Teilen, Sohle und Schaft, bestehenden Hufschuhs um einen Gaiter erweitert. Der Gaiter ist abnehmbar auf der Aussenseite des Hufschuhschaft im Fersenbereich angebracht. Der Schaft weist keine oben beschriebenen Befestigungsmittel auf. Zum Anlegen des Hufschuhs wird der elastische Gaiter nach aussen gestülpt, womit das Pferd leicht in den Hufschuh einsteigen kann. Anschliessend wird der Gaiter am Fesselbein des Pferdes mittels Klettband, welches durch eine Schlaufe geführt wird, angebracht. Der Schaft umschliesst den Huf wobei in der Mitte vorne (Zehenbereich) eine Ausnehmung vorgesehen ist, die dazu beiträgt, den Hufschuh dehnbar (siehe natürliche Bewegung des Hufs: Ausdehnung, Zusammenziehen) zu machen. Im Zehenbereich ist der Hufschuh nicht geschlossen sondern der Schaft umschliesst den Huf bis unter die Haarlinie, den so genannten Kronsaum, während der Gaiter das Fesselbein nur bereichsweise umschliesst (vertikal nur teilweise, horizontal ganz).

Die US 6,694,713 zeigt einen Hufschuh der mit diversen Klettverschlüssen und Riemchen ausgestattet ist. Dabei dienen die Riemchen einer ersten Stabilisierung, sobald der Huf des Pferdes in den Hufschuh eingestiegen ist. Anschliessend erst wird der seitliche Schaft um den Huf gelegt und mittels Klettverschluss verschlossen. Auch dieser Hufschuh zeigt im Zehenbereich eine Verstärkung auf, die der optimalen Positionierung des Hufs im Hufschuh dient. US2005/0166556, US 3,732,929 und US 7,493,963 zeigen alternative Verschlussmechanismen.

Es ist eine Aufgabe der Erfindung einen Hufschuh zu schaffen, welcher die oben genannten Sicherheitsanforderungen erfüllt. Vorzugsweise sollte er gleichzeitig schnell anzuziehen sein sowie mindestens einige der aufgezeigten Nachteile überwinden.

Diese Aufgaben werden durch den erfindungsgemässen Hufschuh, wie er in den unabhängigen Ansprüchen definiert ist, gelöst.

Der Hufschuh weist gemäss einem ersten Aspekt der Erfindung ein am Schaft befestigtes Leuchtmittel auf.

Das Leuchtmittel kann einen Witterungsschutz, bspw. in Form eines Schlauchs aus durchsichtigem - eventuell eingefärbt transparentem - und elastischem bspw. polymeren Werkstoff aufweisen. Weiter gehört mindestens ein lichtemittierendes Element zum Leuchtmittel. Mindestens ein stromführendes Verbindungselement, versorgt das mindestens eine lichtemittierende Element, beispielsweise LED, mit Strom und verbindet im Falle von mehreren lichtemittierenden Elementen diese miteinander. Das stromführende Verbindungselement ist beispielsweise ein Flexprint oder isoliertes oder nicht isoliertes Kabeladerpaar. Wenn mehrere lichtemittierende Elemente, bspw. LEDs, vorhanden sind, können diese in beliebiger Anordnung nämlich dicht, weniger dicht, in gleichmässigem Abstand, in unregelmässigem Abstand, versetzt, nicht versetzt vorliegen. Dabei ist die Farbe der lichtemmittierenden Element frei wählbar. Das Leuchtmittel kann also einfarbig oder bunt sein, ein bestimmtes Muster haben, beispielsweise zwei Farben abwechselnd angeordnet. Auch hier kann die Anordnung der lichtemittierenden Elemente, beispielsweise LED, frei gewählt werden. Ein optionales Ansteuerungsmittel kann auch ein zeitliches Muster - bspw. blinken oder abwechselndes Blinken verschiedener Farben - bewirken.

Die lichtemittierenden Elemente sind je nach Ausführungsform nicht direkt am Witterungsschutz angebracht und dort fixiert, sondern sind am im Witterungsschutz frei beweglichen stromführenden Verbindungselement angebracht. Diese Anordnung ermöglicht ein einfaches Auswechseln von defekten lichtemittierenden Elementen, beispielsweise LED, ohne das gesamte Leuchtmittel vom Hufschuh entfernen zu müssen und verringert das Risiko, dass es im Bereich des Witterungsschutzes zu Überhitzung kommt. Zudem würde ein Fixieren des stromführenden Verbindungselement und des/der lichtemittierenden Elemente/s am Witterungsschutz unter Umständen die Biegbarkeit des Witterungsschutzes beeinträchtigen.

In einer alternativen Ausführungsform befinden sich die beispielsweise LED auf einem stromführenden Verbindungselement welches direkt am Witterungsschutz des Leuchtmittels angebracht ist. Dabei ist sicherzustellen, dass ein für das Aus- und Abziehen des Schuhs notwendige Flexibilität erhalten bleibt.

Der Witterungsschutz kann wie bereits aufgezeigt auch farbig sein. Die Farbe des Witterungsschutzes muss dabei nicht mit der Farbe der lichtemittierenden Elemente übereinstimmen.

Das Leuchtmittel ist bspw. auf der Aussenseite eines Schaftabschlusses angebracht und umgibt die Fessel des Pferdes mindestens teilweise. Diese Ausführungsform stellt sicher, dass die durch das Leuchtmittel erzielte Signalisierung sowohl von vorne als auch von hinten sichtbar ist.

Die Art der Verbindung zwischen Leuchtmittel und Schaft - bspw. Schaftabschluss - kann unterschiedlicher Natur sein. Gemäss einer Ausführungsform ist der Witterungsschutz angeklebt. Die beiden Endes des Leuchtmittels werden wasserdicht verschlossen, bspw. durch einen Silikonpfropfen. Das stromführende Verbindungselement ist elektrisch mit einem Anschlussstecker verbunden. Dieser befindet sich beispielsweise an einem Ende des Witterungsschutzes. Er kann am nach dem Verschliessen innen anliegenden Ende des nachstehend beschriebenen Laschenelements liegen. Dort ist der Anschlussstecker geschützt und verursacht aufgrund des Vorhandenseins eines Gaiters keine Reibungen an der Fessel des Pferdes.

Die lichtemittierenden Elemente wie beispielsweise LEDs sind batteriebetrieben. Die Batterie ist vorzugsweise wiederaufladbar. Die Verbindung erfolgt zum einen über das stromführende Verbindungselement und zum anderen über z.B. Kabel verbunden, wobei sich zwischen den Kabeln und dem stromführenden Verbindungselement ein Anschlussstecker befinden kann, der gleichzeitig die Funktion eines Schalters hat. Der Anschlussstecker dient einerseits dem Wiederaufladen der Batterie. Andererseits kann er eine Schaltung aufweisen, mittels welcher das Leuchtmittel automatisch aktiviert wird, wenn das Ladegerät nicht angehängt ist. Schaltungen, die diesen Anforderungen genügen, sind an sich bekannt, bspw. von Leuchten, die bei Stromausfall automatisch angehen. In diesen Ausführungsformen ist ein Schalter zum Ein- und Ausschalten des Leuchtmittels nicht nötig. In alternativen Ausführungsformen ist im Gegensatz dazu ein Schalter vorhanden, um das Leuchtmittel ein- und auszuschalten.

Da Hufschuhe für gewöhnlich paarweise verwendet werden, ist ein bevorzugtes Ladegerät derart ausgestaltet, dass es zwei Hufschuhe gleichzeitig lädt. Das Ladegerät weist hierfür ein Kabel erster Art auf, welches sich zwischen dem handelsüblichen Stecker und einer Verzweigung befindet und zwei Kabel zweiter Art, welche im Anschluss an die Verzweigung separat voneinander verlaufen und mit den jeweiligen Gegensteckern für die Anschlussstecker der Hufschuhe versehen sind.

Die vorzugsweise wiederaufladbare Batterie kann ausserhalb des Witterungsschutzes angeordnet sein. Dann ist sie über Kabel mit dem Anschlussstecker verbunden und befindet sich beispielsweise in einer wasserdicht ausgestalteten Vorrichtung zum Verstauen der Batterie. Eine solche kann auf einem Aufnäher im Zehenbereich oder an einem anderen Ort im Hufschuh angeordnet sein. Die Batterie kann aber auch im Witterungsschutz selber vorhanden sein. Die Kabelführung erfolgt entsprechend.

Gemäss einer Gruppe von bevorzugten Ausführungsformen weist der Hufschuh nebst einer Sohle, einem Schaft, und einem Leuchtmittel auch einen am Hufschuh befestigbaren oder befestigten Gaiter auf.

Die Sohle kann einen Sohlenboden, einen Sohlenrand von bspw. 0.5 cm bis 2 cm, insbesondere 1 cm bis 1.5 cm Höhe und optional eine vorne hochgezogene Schuhspitze aufweisen, welche den Pferdehuf im vorderen Bereich unterstützt.

Der Schaft weist beispielsweise eine Schaftbasis und ein Laschenelement auf. Das Laschenelement kann im Zehenbereich mit der bereits beschriebene Schuhspitze, in ihrem zentralen Bereich beispielsweise mittels Nuten verbunden sein. Es kann alternativ auch direkt mit der Schaftbasis verbunden sein. Auf der Aussenseite des Schafts befindet sich an dieser Stelle für gewöhnlich eine Verstärkung in Form eines Kunststoffaufklebers oder Kunststoffaufnähers, welche am Schaft angebracht wird und mittels Nuten im zentralen Bereich der Schuhspitze die Schaftbasis mit dem Laschenelement verbindet. Die Nuten, die der Verbindung der Schuhspitze mit dem Schaft dienen, können je nach Ausführungsform sichtbar sein oder auch nicht. Die Anordnung der Nuten ist ebenso frei wählbar wie deren Anzahl. In einer möglichen Ausführungsform sind sie nicht sichtbar, da sie von einer Vorrichtung zum Verstauen der Batterie überdeckt werden.

Die Schaftbasis weist gemäss einer Ausführungsform der Erfindung die bereits beschriebene Schuhspitze und zwei seitliche Teile der Schaftbasis auf, welche an die Schuhspitze angrenzen und die in den in der Sohle dafür vorgesehen Ausnehmungen an ihrem unteren Ende fix verbunden werden. Meist wird dies Verbindung durch Verleimung hergestellt. Die Schaftbasis, insbesondere die beispielsweise zwei seitlichen Teile, gibt dem Huf seitliche Stabilität. Gefertigt ist sie beispielsweise aus Hartplastik und kann je nach Ausführungsform mit einem Überzug versehen sein, dessen Material beispielsweise dem Material des Schafts entspricht oder aus Leder oder Kunstleder usw. besteht. Je nach Verschlussmechanismus, der für das Verschiessen des Hufschuhs verwendet wird, wird auf der äusseren Seite der zwei seitlichen Teile der Schaftbasis ein Klettband mit Widerhaken angebracht. Das Gegenstück, nämlich das Klettband mit Schlaufen, befindet sich auf der Innenseite des dem Schaft zugehörigen Laschenelements - wobei natürlich auch das Umgekehrte (Schlaufen an der Basis, Widerhaken am Laschenelement) denkbar ist..

Das Laschenelement, welches vorderseitig, nämlich an der Schuhspitze, an der Schaftbasis befestigt ist, kann den am in Bezug auf den Pferdefuss proximalen Ende des Laschenelements befindlichen Schaftabschluss bilden. Der Schaftabschluss ist beispielsweise aus Leder oder Kunstleder gefertigt.

Im Fersenbereich des Hufschuhs werden beispielsweise zwei Enden des Lachenelements mittels Klettverschluss miteinander verbunden um den Hufschuh zu schliessen. Zu diesem Zweck wird gemäss einer ersten Möglichkeit auf der Aussenseite eines ersten Endes des Laschenelements ein Klettband mit Widerhaken angebraucht und auf der Innenseite des jeweils zweiten Endes des Laschenelements ein Klettband mit Schlaufen angebracht. Gemäss einer zweiten Möglichkeit wird ein Bändel durch eine Schnalle geführt, umgelegt, so dass er - bspw. ebenfalls mittels Klettverschluss an sich selbst fixiert werden kann. Auch die Verwendung von anderen Verschlussmechanismen ist durchaus möglich.

Erfindungsgemässe Hufschuhe gemäss dem ersten können auch einen ganz anderen als den beschriebenen Aufbau aufweisen und bspw. - bis auf die Ausgestaltung gemäss dem ersten und/oder zweiten Aspekt auch wie an sich aus dem Stand der Technik bekannte Hufschuhe aufgebaut sein.

Der Schaft eines bevorzugten und soeben beschriebenen Hufschuhs ist nebst dem Leuchtmittel - oder, gemäss einem zweiten Aspekt der Erfindung, alternativ dazu - mit einem am Hufschuh befestigten oder befestigbaren Gaiter versehen.

Gemäss einer ersten Option ist der Gaiter auf der Innenseite des Hufschuhs unabnehmbar befestigt und bildet einen fixen Bestandteil des Hufschuhs. In einer bevorzugten Ausführungsform ist der Gaiter auf der Innenseite des Schafts unabnehmbar befestigt. Der Gaiter weist vorzugsweise ein formsteifes Material auf, beispielsweise Neopren. Auch andere Materialien sind möglich. Bevorzugt sollte das gewählte Material eine Formsteifigkeit aufweisen (d.h. nicht wie ein Stück Stoff in sich zusammenfallen), aber weich, reversibel flexibel, und leicht sein. Insbesondere - aber nicht nur - wenn als Material Neopren gewählt wird, hat der Gaiter beispielsweise eine Dicke von zwischen 0.3 cm und 1 cm, insbesondere 0.45 cm - 0.75 cm. Es ist zudem nicht zwingend, dass der Gaiter aus einem einzigen Material besteht - so kann er beispielsweise in seinem der Sohle zugewandten Bereich auch aus einem anderen, befestigungsfreundlichen, belastungsunempfindlicheren Material ( einem Material, das nicht ausreisst, gut klebt, sodass der Gaiter nicht gleich ersetzt werden muss, usw.) gefertigt sein. Es wäre auch ein Material vorstellbar, dass die Ferse des Pferdes besonders pflegt oder schont- beispielsweise im Falle einer chronischen Erkrankung im Hufbereich.

Der Gaiter ist vorzugsweise einstückig und weist keinen Sohlenbereich auf. Er besteht zum Beispiel lediglich aus zwei Gaiterlaschen, welche im Zehenbereich oder seitlich, im Bereich der zwei Teile der Schaftbasis, ineinander übergehen. Verschlossen werden die beiden Gaiterlaschen mittels eines Klettverschlusses, wobei eine Gaiterlasche erster Art hierfür auf ihrer Aussenseite mit einem Klettband mit Widerhaken versehen wird und die Gaiterlasche zweiter Art mit einem Klettband mit Schlaufen versehen wird. Beiden Klettbänder sollten betreffend ihrer Länge derart gewählt werden, dass sie eine Vielzahl von Verschlusspositionen ermöglichen (zum Beispiel um eine festere Fessel genauso gut verschliessbar sind wie um eine dünnere Fessel). Zu diesem Zweck kann die Gaiterlasche zweiter Art um eine zusätzlichen Klettband mit Schlaufen, welches an die Gaiterlasche zweiter Art seitlich angenäht wird, verlängert werden. Dieses Klettband kann je nach Ausführungsform schmaler sein, als die Gaiterlasche zweiter Art.

Einer der Vorteile eines Gaiter, welcher auf der Innenseite des Hufschuhs angebracht wird liegt darin, dass keine zusätzlichen Schrauben, Nuten usw. im Bereich des Hufes angebracht werden müssen. Zudem ist der erfindungsgemässe Hufschuh völlig geschlossen, d.h. der Huf des Pferdes ist nicht sichtbar und völlig geschützt. Der Pferdehuf wird vom Gaiter bis entweder über oder unter aber vorzugsweise nicht direkt auf dem Kornsaum umschlossen, was zusätzliche Stabilität für den Huf des Pferdes bietet und aufgrund des weichen Materials, aus welchem der Gaiter besteht, zu keinen unnötigen Reibungen führt. Der Gaiter selber reicht je nach Ausführungsform der Erfindung über den Schaftabschluss des Hufschuhs hinaus, bspw. mindestens 1 cm, insbesondere zwischen 3 und 7 cm. Vorzugsweise reicht er mindestens 5 cm über den Schaftabschluss. Es wäre aber durchaus möglich, dass der Gaiter exakt gleich hoch ist, wie der Hufschuh (inklusive dem Laschenelement, dem Schaftabschluss und ggf. dem Leuchtmittel) und von aussen kaum oder gar nicht sichtbar ist. Der Gaiter kann auch beim Anziehen des Hufschuhs eine erste Stabilität schaffen, die das Anziehen des Hufschuhs wesentlich erleichtert. Er kann - wenn er bspw. vorne verschlossen wird, während der Schuh hingen verschlossen wird, ein Positionieren des Hufs im Schuh erleichtern.

Alternativ zum oben beschriebenen Befestigungsort des Gaiters könnte der Gaiter beispielsweise entlang der Innenseite des Schaftabschlusses angebracht werden, wobei er in einer derartigen Ausführungsform nicht bis zum Sohlenboden reichen würde. Alternativ kann er auch oder im seitlichen Schaftbereich (d.h. zwei seitlichen Teile der Schaftbasis) angebracht werden, wobei der Gaiter in einer derartigen Ausführungsform bis ganz oder fast zur Bodensohle reichen kann.

Gemäss einer zweiten Option ist der Gaiter nicht unabnehmbar befestigt, sondern reversibel befestigbar, bspw. mittels Klettverschluss. Die vorstehenden Ausführungen betreffend Befestigungsposition gelten auch für diesen Fall. Dies ermöglicht, dass der Gaiter nach starker Abnutzung beispielsweise ersetzt werden kann oder dass die Gaiterposition nachkorrigiert werden kann. Auch andere reversible Befestigungsargen sind denkbar, bspw. sehr flache Druckknöpfe.

,Auf der Innenseite des Schafts befestigt' soll heissen, dass der Gaiter sich nach der Befestigung auf der Innenseite des Schafts befindet.

Ein Gaiter, der auf der Innenseite eines Hufschuhs angebracht wird hat ausserdem den Vorteil, dass kein Schmutz in den Hufschuh gelangt, um dort für Reibungen zu sorgen, was Irritation und Verletzungen hervorrufen kann. Zudem wird durch den Gaiter der sich je nach Ausführungsform aber zumindest im seitlichen und hinteren Bereich des Hufschuhs über mindestens die gesamte Höhe des Schafts erstreckt zusätzliche Stabilität geboten.

Weitere funktionelle Beschichtungen - schmutzabweisend und/oder wasserfest phosphoreszierend etc. sind denkbar

Wird der Gaiter angenäht, was nur eine von mehreren möglichen Arten der Befestigung ist, verlaufen gemäss einer Ausführungsform der Erfindung sämtliche Nähte, die zur bestmöglichen Befestigung notwendig sind, entlang der Fläche des Fersenelements. Beispielsweise verläuft eine der Nähte parallel zum Schaftabschluss im Fersenelement unterhalb desselbigen und parallel zur Sohle knapp oberhalb dem Sohlenrand. Die Nähte sind dabei relative lange zu halten, müssen aber nicht gleich lang sein. Die Nähte können sich auch kreuzen, können einen Kreis bilden, könnten das gesamte Fersenelement umlaufen. Hier sind viele Varianten denkbar: sie müssen also nicht zwingend gerade verlaufen.

Alternativ könnte der Gaiter auch an der Innenseite des Hufschuhs angeleimt oder angeheftet werden.

Nachfolgend wird ein Ausführungsbeispiel der Erfindung anhand von Zeichnungen näher beschrieben. Grundsätzlich sind in den Figuren gleiche Teile mit gleichen Bezugszeichen versehen. In den Figuren zeigen:
- Fig. 1 einen Hufschuh in Vorderansicht;
- Fig. 2 den Hufschuh nach Fig. 1 in Hinteransicht;
- Fig. 3 eine Seitenansicht des Hufschuhs;
- Fig. 4 eine Ansicht von oben;
- Fig. 5 eine Ansicht im offenen Zustand; und
- Fig. 6 eine weitere Ansicht im offenen Zustand.

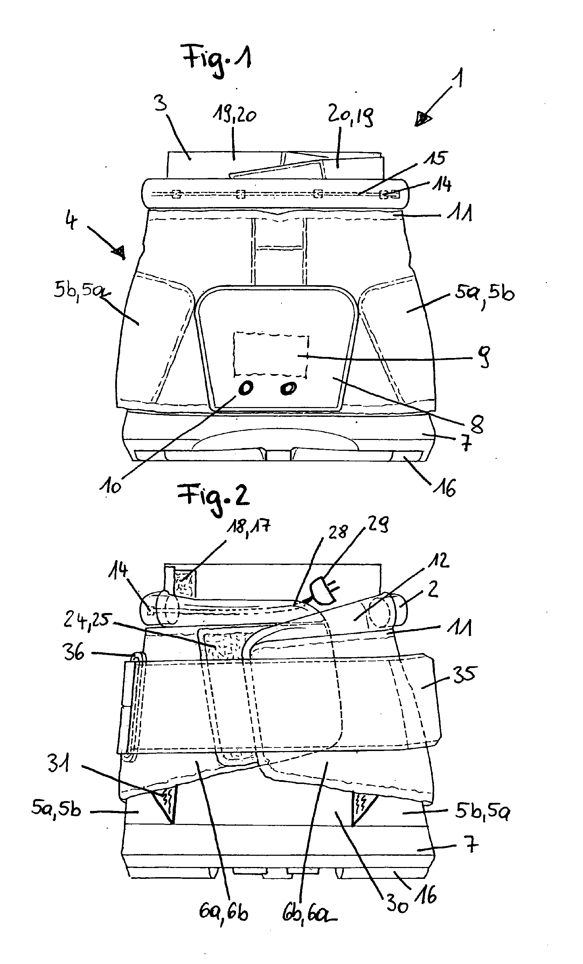

**Figur 1** zeigt einen Hufschuh 1 gemäss einer Ausführungsform der Erfindung im geschlossenen Zustand in Frontansicht. Der Hufschuh 1 weist eine Sohle 7 mit einem beliebigen Profil 16, einen Schaft 4, ein Leuchtmittel 2 und einen Gaiter 3 auf.

Der Schaft 4 weist zur im Bezug auf den Pferdefuss proximalen Seite hin einen Schaftabschluss 11 auf. Der Schaftabschluss 11 umschliesst die Fessel des Pferdes zumindest teilweise. Das Leuchtmittel 2 ist am Schaft 4 angebracht (beispielsweise durch Ankleben) und weist als Witterungsschutz beispielsweise einen Schlauch 13 aus polymerem Werkstoff, ein stromführendes Verbindungselement 15 (beispielsweise Flexprint, Drahtpaar etc.) sowie ein oder mehrere lichtemittierende Element 14 auf. Das stromführende Verbindungselement 15 ist über ein Kabel 28 mit einem Anschlussstecker 29 verbunden, welcher über ein weiteres Kabel mit einer Batterie verbunden ist und dient der Versorgung des Leuchtmittels 2 mit elektrischer Energie.

Auf der Innenseite des Hufschuhs 1 befindet sich ein Gaiter 3, welcher über den Schaftabschluss 11 hinaus ragt (je nach Ausführungsform kann der Gaiter 3 auch die selbe Höhe wie der Schaft 4 inklusive dem Schaftabschluss 11 und dem Leuchtmittel 2 haben, womit er von aussen nicht mehr sichtbar ist).

Weiter zeigt Fig. 1 im seitlichen Bereich des Schafts 4 die Schaftbasis 5, welche in Fig. 1 vom Laschenelement 6 bedeckt ist. Die Schaftbasis 5 ist an der Sohle 7 angeklebt und besteht aus Hartplastik und/oder Leder (Kunstleder) oder aus Hartplastik mit einem Überzug aus Leder oder Kunstleder oder einem Material, welches dem des Schafts 5 entspricht. Weiter weist der Schaft ein Laschenelement 6 auf, welches im hinteren Bereich des Hufschuhs 1 (siehe Figur 2) in zwei Enden 6a und 6b ausläuft. Im Zehenbereich weist das Laschenelement 6 einen Aufnäher 8 auf, welcher am Schaft 4 angebracht ist und das Laschenelement 6 mit der Schaftbasis 5 mittels beispielsweise einer oder mehrerer Nuten 10 verbindet.

Die Sohle 7 weist bspw. im vorderen Bereich, dem Zehenbereich, eine Schuhspitze auf, welche sich in einem Winkel, der der Steigung des Pferdehufs entspricht, vom äusseren Rand der Sohle nach innen, also in Richtung des Fersenbereichs des Hufschuhs krümmt und mit dem Schaft über beispielsweise mehrere Nuten verbunden ist.

Die Schuhspitze kann aus dem selben Material gefertigt wie die Sohle selbst oder einem Material von bspw. ähnlicher Härte gebildet sein und bildet mit der Sohle vorzugsweise ein Stück. An ihrem oberen, nach innen gekrümmten Ende hat die Schuhspitze beispielsweise mindestens eine Aussparung. Diese Aussparung kann derart ausgestaltet sein, dass sie knapp bis zum Sohlenboden reicht und dadurch eine mehrteilige Schuhspitze entsteht. Sie dient bzw. dienen dazu, die Schuhspitze trotz ihres festen Materials zumindest in ihrem oberen Bereich flexibel zu gestalten, um dem Huf ausreichend Bewegungsfreiheit zu gewähren. Seitlich sind mindestens zwei Aussparungen für die Schaftbasis 5, welche in einer Ausführungsform der Erfindung zweiteilig ist, vorgesehen. Die Aussparung kann im seitlichen Fersenbereich eine Erhöhung erfahren.

Im hinteren Fersenbereich springt der Sohlenrand in der der Schuhspitze entgegen gesetzten Richtung vor. Diese Formgebung der Sohle entspricht der Anatomie des Pferdehufs und unterstützt eine möglichst natürlich Haltung des Pferdes im Hufschuh und hilft bei der Positionierung des Pferdehufs im Hufschuh. Die Sohle weist über dies hinaus ein Profil auf, welches je nach Gebrauchsabsichten gestaltet wird. Für Gänge in die Berge wird ein gröberes Profil gewählt als für Kurzausritte in der Ebene.

Weiter weist der Schaft ein Fersenelement 30 auf. Das Fersenelement ist mit der Sohle verbunden und befindet sich am hinteren Ende der Sohle, nämlich im Fersenbereich des Hufschuhs zwischen den zwei seitlichen Teilen der Schaftbasis. Das Fersenelement muss dabei nicht direkt an die zwei seitlichen Teile der Schaftbasis anstossen. Die zwei Teile der Schaftbasis werden mit dem Fersenelement über ein elastisches Band verbunden, einem Gummiband beispielsweise. Dies bietet dem Huf die nötige Bewegungsfreiheit. Das Fersenelement ist aus relativ weichem Material gefertigt. So kann die äussere Seite des Fersenelements beispielsweise aus dem selben Material bestehen wie das Laschenelement 6. Für gewöhnlich wird die innere Seite des Fersenelement mit einem weicheren Material - beispielsweise Leder - versehen, da hier das empfindliche Ferse des Pferdes anliegt. Das Leder auf der Innenseite des Fersenelements kann zur Bildung des Schaftabschluss verwendet werden, indem das Leder über den oberen Rand, in Bezug auf den Pferdefuss proximal, gezogen wird und auf der Aussenseite des Fersenelements angenäht wird wobei es den Schaftabschluss im Fersenelement bildet.

**Figur 2** zeigt den erfindungsgemässen Hufschuh 1 im geschlossenen Zustand in Hinteransicht. Hier wird die Wulst 12 des Schaftabschlusses sichtbar, welche die beiden Enden des Schlauchs 13 des Leuchtmittels 2 aufnehmen. Eine der beiden Wülste 12 führt das Kabel 28 ins Innere des Hufschuhs 1, wo sich auch der Anschlussstecker 29 befindet. Weiter sind in Fig. 2 die beiden Endes des Laschenelements 6 sichtbar. Die beiden Enden des Laschenelements werden durch einen Klettverschuss miteinander verbunden. Dabei weist eines der beiden Endes des Laschenelements 6a ein Klettband mit Widerhaken auf während das andere der beiden Enden 6b im korrespondierenden Bereich ein Klettband mit Schlaufen aufweist.

In einer möglichen Ausführungsform wird über die beiden Enden des Laschenelements 6 ein zusätzlicher Verschlussmechanismus angebracht, nämlich eine im seitlichen Bereich des Schafts 4 angebrachtes vorzugsweise angenähtes Klettband 35, welches durch eine an der gegenüberliegenden Seite des Schafts angebrachten Schnalle 36 geführt wird und über den beiden Enden des Laschenelements 6a und 6b mit sich selber verschlossen wird. Dem Fachmann ist die Funktionsweise eines solchen Klettbandes bekannt. Durch den zusätzlichen Verschlussmechanismus soll sichergestellt werden, dass sich die beiden Enden des Laschenelements 6a und 6b im Fersenbereich des Hufschuhs 1 nicht öffnen.

Figur 2 zeigt zudem, dass das Kabel 28, welches das stromführende Verbindungselement 15 mit dem Anschlussstecker 29 verbindet durch Wulst 12 geführt wird und in einer erfindungsgemässen Ausführungsform der Anschlussstecker 29 im Inneren des Hufschuhs 1 liegt, vorzugsweise auf der inneren Seite des im geschlossenen Zustand am Gaiter 3 anliegenden Ende des Laschenelements 6a oder 6b. Darüber hinaus zeigt Figur 2 das Fersenelement 30 sowie das elastische Band 31, welches der Verbindung der Schaftbasis 5 mit dem Fersenelement dient.

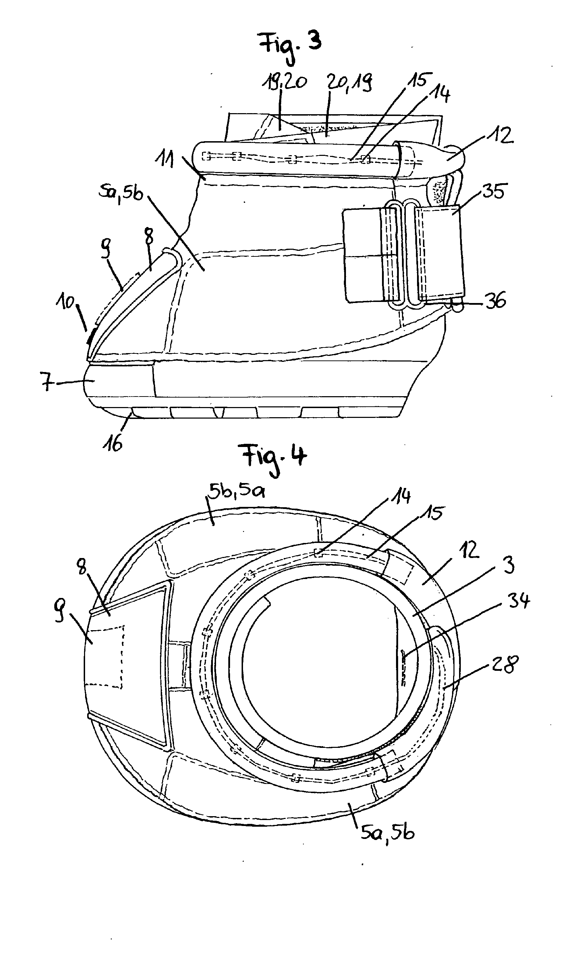

**Figur 3** zeigt eine seitliche Ansicht des Hufs wobei der Vorsprung der Sohle 33 ersichtlich wird sowie die seitlichen Aussparung 32 in der Sohle 7, wo die beispielsweise zwei seitlichen Teile der Schaftbasis 5a und 5b der Schaftbasis 5 angeklebt oder anderweitig befestigt werden. Ausserdem zeigt Fig. 3, dass das Leuchtmittel 2die Fessel des Pferdes fast aber zumindest teilweise umschliesst und dementsprechend sowohl von vorne als auch von hinten sichtbar ist.

Im Zehenbereich ist die Vorrichtung zum Verstauen der Batterie 9 sowie der Aufnäher 8 nochmals sichtbar gemacht. Zudem wird ersichtlicht, dass in einer bevorzugten Ausführungsform der Erfindung die Schaftbasis 5 gegen hinten eine Steigung erfährt, welche die Positionierung des Pferdehufs im Pferdeschuh erleichtert.

Der Gaiter 3 ragt proximal über den Schaftabschluss und wird vom Laschenelement 6 umschlossen. Zur zusätzlichen Fixierung (abgesehen von den Klettbänder an den beiden Enden des Laschenelements 6a und 6b) kann je nach Ausführungsform ein zusätzliches Klettband 35 sowie eine Schnalle zur Führung des zusätzlichen Klettband 36 im seitlichen Bereich des Schafts 4 auf der Aussenseite angebracht werden.

**Figur 4** zeigt den Hufschuhl von oben wobei im Wesentlichen sichtbar wird, dass das Leuchtmittel 2 die Fessel des Pferdes zumindest teilweise umschliesst. In Fig. 4 wird zudem gezeigt, dass der Gaiter 3 in einer möglichen Ausführungsform auf der Innenseite des Hufschuhs 1 im Fersenbereich unabnehmbar angenäht ist (siehe Naht 34) und sich im Schaft 4 befindet.

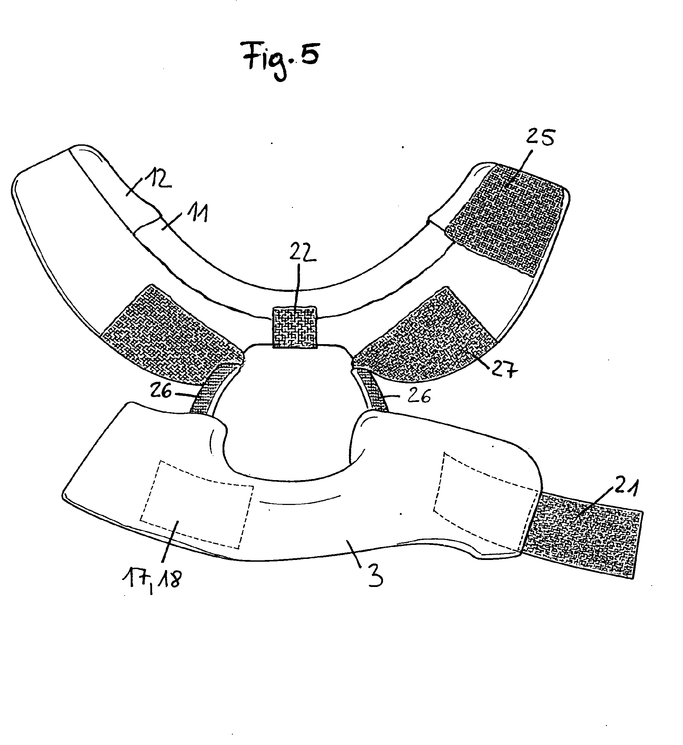

**Figur 5** zeigt den Hufschuh 1 wie er vor dem Anziehen aufgeklappt wird. Sowohl der Gaiter 3 als auch das Laschenelement 6 werden über die festen Bestandteile der Schaftbasis 5 (Schuhspitze (hier nicht ersichtlich) und zwei seitliche Teile der Schaftbasis 5a und 5b) sowie das Fersenelement 30 geklappt. Der Pferdefuss wird im Schuh positioniert, wobei die Schaftbasis 5 dienlich ist.

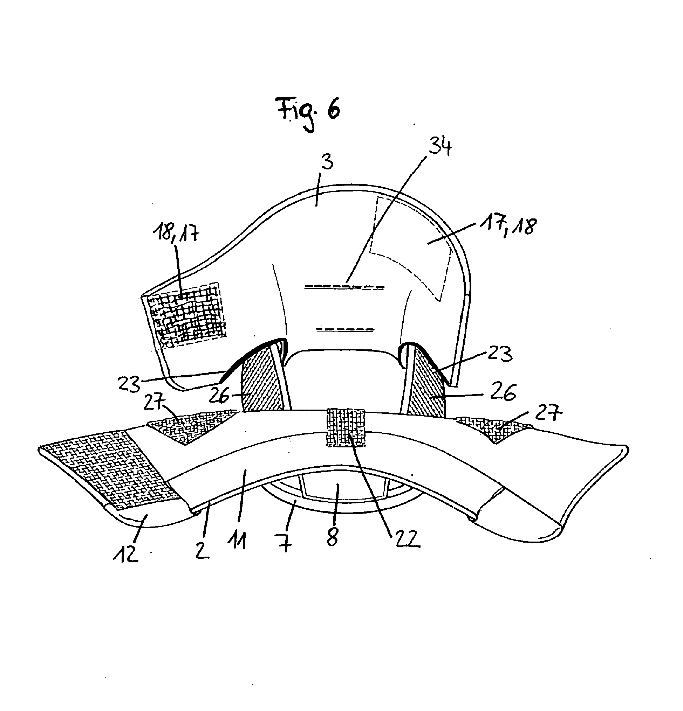

In **Figur 6** sieht man, dass beim Anziehen des Hufschuhs 1, nachdem der Pferdefuss im Hufschuh 1 positioniert wurde, der Gaiter 3 hochgeklappt wird während das Laschenelement 6 nach aussen geklappt bleibt. Erst nachdem der Gaiter 3 mittels den dafür vorgesehenen Klettbändern 17, 18 und eventuell 21, welche an den Gaiterlaschen erster Art 19 und zweiter Art 20 angebracht sind um die Fessel des Pferdes angelegt und fixiert wurde, wird das Laschenenelement 6 hoch geklappt und um den bereits angelegten Gaiter 3 gelegt. Durch den angelegten Gaiter 3 ist bereits eine erste Stabilität für den Pferdefuss im Hufschuh 1 gegeben. Nachdem das Laschenelement 6 hochgeklappt und um den bereits fixierten Gaiter 3 gelegt wird, werden die beispielsweise zwei Enden des Laschenelements 6a und 6b mittels der dafür vorgesehen Klettbänder 25 und 26 verbunden und der Schaft 4 wird mit der Schaftbasis 5 bzw. 5a und 5b mit den dafür vorgesehen Klettbänder 26, 27 an den beiden seitlichen Teilen der Schaftbasis 5 befestigt. In einer möglichen Ausführungsform verfügen das Laschenelement 6 und der Gaiter 3 über eine zusätzlichen Klettverschluss 22 welcher zusätzlichen Halt gewährt und den Gaiter 3 im Schaft 4 nicht verrutschen lässt. Ausserdem zeigt Fig. 6 den Verlauf des Gaiterabschluss 23 welcher entweder über oder unter dem Kornsaum des Pferdefusses verläuft.

Fig. 6 zeigt zudem eine möglichen verlauf der Nähte 34 zur unabnehmbaren Befestigung des Gaiters 3 auf der Innenseite des Schafts 4.

Neben dem Schaftabschluss 11 wird das Leuchtmittel 2 sowie die Wulst 12 gezeigt. Auf die Darstellung des Anschlusssteckers 29 wird in den Figuren 5 und 6 verzichtet.

## Patentansprüche

1. Hufschuh (1), welcher eine Sohle (7) und einen Schaft (4) aufweist, **dadurch gekennzeichnet, dass** am Schaft (4) ein Leuchtmittel (2) mit mindestens einem lichtemittierenden Element (14) und einer Batterie zur Versorgung des Leuchtmittels (2) mit elektrischer Energie befestigt ist.

2. Hufschuh (1) gemäss Anspruch 1, wobei der Schaft (4) zur im Bezug auf den Pferdefuss proximalen Seite hin einen Schaftabschluss (11) aufweist **dadurch gekennzeichnet, dass** das Leuchtmittel (2) ausgedehnt entlang dem Schaftabschluss (11) verlaufend an diesem befestigt ist, sodass das Leuchtelement (2) die Fessel mindestens teilweise umschliesst.

3. Hufschuh (1) gemäss Anspruch 1 oder 2, **dadurch gekennzeichnet, dass** das Leuchtmittel mindestens ein LED als lichtemittierendes Element (14) aufweist.

4. Hufschuh (1) gemäss einem der vorangehenden Ansprüche, **dadurch gekennzeichnet, dass** das Leuchtmittel (2) eine Mehrzahl von lichtemittierenden Elementen (14) aufweist, die beispielsweise in regelmässigen Abständen angeordnet sind.

5. Hufschuh (1) gemäss Anspruch 4, **dadurch gekennzeichnet, dass** das die lichtemittierenden Elemente (14) über ein stromführendes Verbindungselement (15) miteinander verbunden sind, wobei dieses Verbindungselement (15) vorzugsweise aus einem flexiblen Material besteht und beispielsweise als Flexprint ausgebildet ist.

6. Hufschuh (1) gemäss einem der vorangehenden Ansprüche, **dadurch gekennzeichnet, dass** ein mit dem Leuchtmittel (2) und der Batterie verbundener Anschlussstecker (29) eine Schalterfunktion hat, welche durch das An- und Abstecken des Anschlusssteckers (29) an ein Ladegerät betätigt wird, derart, dass das Leuchtmittel (2) eingeschaltet ist, wenn der Anschlussstecker (29) nicht am Ladegerät angehängt ist.

7. Hufschuh (1) gemäss einem der vorangehenden Ansprüche, **dadurch gekennzeichnet, dass** die Batterie des Leuchtmittels (2) wiederaufladbar ist.

8. Hufschuh (1) gemäss einem der vorangehenden Ansprüche, **dadurch gekennzeichnet, dass** die Batterie in oder auf einem am Schaft (4) im Bereich der Schuhspitze zumindest teilweise angebrachten Aufnäher (8) gelagert wird.

9. Hufschuh (1) gemäss einem der vorangehenden Ansprüche, **dadurch gekennzeichnet, dass** er einen Gaiter aufweist, welcher innenseitig am Schaft (4) oder der Sohle (7) befestigt oder befestigbar ist.

10. Hufschuh (1) gemäss Anspruch 9, **dadurch gekennzeichnet, dass** der Gaiter (3) unabnehmbar befestigt, beispielsweise angenäht ist.

11. Hufschuh (1 gemäss Anspruch 9 oder 10, **dadurch gekennzeichnet, dass** der Gaiter (3) ein in sich steifes, flexibles Material aufweist, vorzugsweise Neopren, beispielsweise der Stärke 0.3 cm - 1 cm, insbesondere 0.45 cm- 0.75 cm.

12. Hufschuh (1) gemäss einem der Ansprüche 9-11, **dadurch gekennzeichnet, dass** der Gaiter (3) im Fersenbereich befestigt oder befestigbar ist.

13. Hufschuh (1) gemäss einem der Ansprüche 9-12, **dadurch gekennzeichnet, dass** der Gaiter (3) in Bezug auf den Pferdefuss proximal über Schaftabschluss (11) des Hufschuhs (1) hinaus ragt

14. Hufschuh nach einem der vorangehenden Ansprüche, **dadurch gekennzeichnet, dass** der Schaft (4) eine Schaftbasis (5) und ein an der Schaftbasis (5) vorderseitig befestigtes, in einem geschlossenen Zustand die Schaftbasis (5) umgreifendes und einen in Bezug auf den Perdefuss proximalen Schaftabschluss (11) bildendes sowie in einem geöffneten Zustand von der Schaftbasis (5) weggeklapptes Laschenelement (6) aufweist.

15. Hufschuh (1), insbesondere nach einem der vorangehenden Ansprüche, aufweisend eine Sohle (7) und einen Schaft (4), welcher einen in Bezug auf die Schaftbasis (5) proximalen Schaftabschluss (11) aufweist, **gekennzeichnet durch** einen innenseitig am Schaft (5) oder der Sohle (7) befestigbaren oder befestigten Gaiter (3), welcher proximal über den Schaftabschluss (11) hinaus ragt und aus einem formsteifen Material, beispielsweise Neopren, gefertigt ist.
